# EUROPÄISCHE PATENTSCHRIFT

(11) **EP 3 898 327 B1**
(45) Veröffentlichungstag und Bekanntmachung des Hinweises auf die Patenterteilung: **19.07.2023**
(21) Anmeldenummer: 19832316.4
(22) Anmeldetag: 17.12.2019
(51) Int. Cl.: B60Q 1/08, B60Q 9/00, F21W 103/60

(54) **LICHTMODUL-SYSTEM UND VERFAHREN ZUM STEUERN DES LICHTMODUL-SYSTEMS**
LIGHT MODULE SYSTEM AND METHOD OF CONTROLLING THE LIGHT MODULE SYSTEM
SYSTÈME DE MODULES LUMINEUX ET PROCÉDÉ DE COMMANDE DU SYSTÈME DE MODULES LUMINEUX

(30) Priorität: 18.12.2018 EP 18213620
(43) Veröffentlichungstag der Anmeldung: 27.10.2021
(73) Patentinhaber: ZKW Group GmbH, 3250 Wieselburg (AT)
(72) Erfinder: PLANK, Josef, 3251 Purgstall/Erlauf (AT); SCHLINGER, Thomas, 3071 Böheimkirchen (AT); MOSER, Andreas, 4320 Perg (AT); REISINGER, Bettina, 3300 Amstetten (AT)
(74) Vertreter: Patentanwaltskanzlei Matschnig & Forsthuber OG
(86) Internationale Anmeldenummer: PCT/EP2019/085491
(87) Internationale Veröffentlichungsnummer: WO 2020/127152

(56) Entgegenhaltungen:
- EP-A1- 3 305 592
- WO-A1-2017/046168
- DE-A1-102018 105 563
- FR-A1- 3 043 168
- US-A1- 2018 118 095
- US-B2- 10 632 896

## Beschreibung

Die Erfindung betrifft ein Lichtmodul-System nach Anspruch 1. Dieses Lichtmodul-System umfasst unter Anderem ein erstes Lichtmodul und ein zweites Lichtmodul, wobei das erste Lichtmodul in Abhängigkeit von dem zweiten Lichtmodul steuerbar ist, wobei das erste Lichtmodul als ein nichthochauflösendes Lichtmodul ausgebildet ist und eingerichtet ist, eine Lichtverteilung eines ersten Typs in einem Bereich vor dem Lichtmodul-System zu erzeugen, wobei die gesamte Lichtverteilung des ersten Typs eine dimmbare Abblendlichtverteilung ist, die eine Hell-Dunkel-Grenze aufweist, das zweite Lichtmodul als ein hochauflösendes Lichtmodul ausgebildet ist, wobei einem Teil der Lichtverteilung des ersten Typs eine Mindesthelligkeit zugeordnet ist, wobei der Teil ein Bereich der Lichtverteilung des ersten Typs ist, welcher deren Hell-Dunkel-Grenze aufweist,

Außerdem betrifft die Erfindung ein Verfahren zum Steuern eines Lichtmodul-Systems eines Kraftfahrzeugscheinwerfers nach Anspruch 6.

Darüber hinaus betrifft die Erfindung ein Computerprogramm umfassend Befehle, die bewirken, dass das Lichtmodul-System der oben genannten Art das Verfahren der oben genannten Art ausführt, und computerlesbares Medium mit einem solchen Computerprogramm.

Des Weiteren betrifft die Erfindung eine Kraftfahrzeug-Steuervorrichtung, insbesondere Steuervorrichtung für ein Lichtmodul-System der oben genannten Art, mit einem computerlesbaren Medium der oben genannten Art.

Außerdem betrifft die Erfindung ein Kraftfahrzeug oder einen Kraftfahrzeugscheinwerfer mit zumindest einem Lichtmodul-System der oben genannten Art und/oder mit zumindest einem computerlesbaren Medium der oben genannten Art oder mit zumindest einer Kraftfahrzeug-Steuervorrichtung der oben genannten Art.

Bereits heute werden Kraftfahrzeug-Scheinwerfer mit hochauflösenden Lichtmodulen ausgestattet, die vorwiegend in einem Zentralbereich die Möglichkeit schaffen, flexible Lichtverteilungen zu generieren. Unter anderem können mithilfe solcher Lichtmodule verschiedene Symbole auf die Fahrbahn vor oder neben dem Kraftfahrzeug projiziert werden. Die hochauflösenden Lichtmodule können somit zu einer optischen Darstellung von Information genutzt werden, wobei die entsprechenden Symbol-Projektionen, die als optische Darstellung der Information dienen, oft unter dem Begriff Advanced Information Beam (AIB) zusammengefasst werden. Neben den hochauflösenden Lichtmodulen kommen

in solchen Kraftfahrzeug-Scheinwerfern als Ergänzung zusätzlich konventionelle, meist eine niedrigere beziehungsweise grobe Auflösung aufweisende Lichtmodule zum Einsatz, um Randbereiche der Lichtverteilung abzudecken.

Aufgrund des oben Gesagten wird unter einer vorgenannten Dimmbarkeit der gesamten Lichtverteilung des ersten Typs verstanden, dass nicht nur die gesamte Lichtverteilung gedimmt werden kann, sondern auch vorgegebene Teile der Lichtverteilung unabhängig oder auch abhängig von dem Rest der Lichtverteilung gedimmt werden können.

Bei der Umsetzung von AIB ist es wünschenswert, dass die Symbole, die die Information optisch darstellen, im Vorfeldbereich der Lichtverteilung mit ausreichendem Kontrast dargestellt werden, um deutlich erkennbar zu sein. Das Dokument WO2017046168A1 zeigt ein solches Beleuchtungssystem für Kraftfahrzeuge.

Die Aufgabe der vorliegenden Erfindung besteht darin, ein Lichtmodul-System sowie ein Verfahren zum Steuern eines Lichtmodul-Systems bereitzustellen, die ermöglichen, die Wahrnehmung der optisch dargestellten Information zu verbessern ohne die Helligkeit in vorgegebenen, vorzugsweise wesentlichen Bereichen der Lichtverteilung zu beeinträchtigen und insbesondere die Mindesthelligkeit in diesen Bereichen nicht zu unterschreiten.

Die Aufgabe wird mit einem Lichtmodul-System nach Anspruch 1 erfindungsgemäß dadurch gelöst, dass das zweite Lichtmodul eingerichtet ist, in einem Betriebsmodus zumindest eine hochauflösende Bodenprojektion-Lichtverteilung zu erzeugen, wobei die zumindest eine Bodenprojektion-Lichtverteilung eine optische Darstellung einer Information umfasst beziehungsweise ist, und dabei das erste Lichtmodul (direkt oder indirekt) dazu zu veranlassen, die gesamte Lichtverteilung des ersten Typs zu dimmen (herab zu dimmen), und den Teil der Lichtverteilung des ersten Typs hochauflösend auszuleuchten, sodass in dem Teil dieselbe Helligkeit wie bei einer ungedimmten Lichtverteilung des ersten Typs vorliegt. Vorzugsweise leuchtet das zweite Lichtmodul alle Bereiche beziehungsweise Teile der Lichtverteilung des ersten Typs aus, deren Helligkeit reduziert wurde, außer den Bereich unmittelbar um die Bodenprojektion-Lichtverteilung.

Unter dem Ausdruck "einem Teil der Lichtverteilung ist eine Mindesthelligkeit zugeordnet" wird verstanden, dass für diesen Teil der Lichtverteilung eine Mindesthelligkeit vorgeschrieben ist, die nicht unterschritten werden darf, wenn z.B. die Lichtverteilung von ihrer vollen Helligkeit herunter- beziehungsweise zurückgedimmt wird. Die Mindesthelligkeit für bestimmte Kraftfahrzeug-Beleuchtungssysteme kann beispielsweise an bestimmten Punkten und/oder Segmenten der Lichtverteilung oder des Teils der Lichtverteilung vorgeschrieben sein (siehe z.B. ABI. L 222 der Europäischen Union vom 24.8.2010, S. 1-61).

Mit der Formulierung, dass "das zweite Lichtmodul eingerichtet ist, in einem Betriebsmodus zumindest eine Bodenprojektion-Lichtverteilung zu erzeugen, ..., und dabei das erste Lichtmodul (direkt oder indirekt) dazu zu veranlassen, die Lichtverteilung des ersten Typs zumindest teilweise zu dimmen (herab zu dimmen)", wird zum Ausdruck gebracht, dass das zweite Lichtmodul entsprechende Steuersignale (Befehle) an das erste Lichtmodul schickt, nachdem, vorzugsweise sobald es die Bodenprojektion-Lichtverteilung erzeugt hat und dadurch das erste Lichtmodul - in dem Fall direkt - dazu veranlasst, die gesamte Lichtverteilung des ersten Typs zu dimmen.

In einem Beispiel außerhalb des Erfindungsumfangs, kann das zweite Lichtmodul das erste Lichtmodul dazu veranlassen, die gesamte oder nur einen Teil der Lichtverteilung des ersten Typs vorzugsweise sukzessiv zu dimmen, gleich nachdem es die Bodenprojektion-Lichtverteilung erzeugt hat.

Indem das zweite Lichtmodul in dem oben genannten Betriebsmodus den Teil der Lichtverteilung ausleuchtet, wenn die Lichtverteilung des ersten Typs gedimmt ist, unterstützt es das erste Lichtmodul und bewirkt, dass die Helligkeit in diesem Teil nicht wesentlich beeinträchtigt wird und insbesondere konstant bleibt und die Mindesthelligkeit gar nicht unterschritten wird. Dies bedeutet, dass das zweite Lichtmodul den Teil der Lichtverteilung frühestens zu dem Zeitpunkt auszuleuchten anfängt, an dem das erste Lichtmodul anfängt, die Lichtverteilung des ersten Typs zu dimmen - in diesem Fall bleibt die Helligkeit des Teils der Lichtverteilung im Wesentlichen konstant, und spätestens zu dem Zeitpunkt auszuleuchten anfängt, zu dem die Helligkeit in dem Teil der Lichtverteilung die Mindesthelligkeit erreicht beziehungsweise auf die Mindesthelligkeit herabgesetzt wird - in diesem Fall wird die Helligkeit in dem Teil der Lichtverteilung nur für eine kurze Zeit reduziert.

Im Zusammenhang mit der vorliegenden Erfindung wird unter dem Begriff "hochauflösendes Lichtmodul" beziehungsweise "nichthochauflösendes Lichtmodul" ein

Lichtmodul verstanden, das dazu eingerichtet ist, eine hochauflösende beziehungsweise nichthochauflösende Lichtverteilung zu erzeugen.

Die "Auflösung einer Lichtverteilung" mithilfe des kleinsten auszublendenden beziehungsweise des kleinsten unabhängig kontrollierbaren Bereichs dieser Lichtverteilung definiert werden.

Wird beispielsweise als kleinstmöglicher Verkehrsteilnehmer ein Motorrad mit einer Breite von 1 m angenommen, sollte für diesen Verkehrsteilnehmer optimalerweise ein (horizontaler) Bereich von 1,5 m ausgeblendet werden. Es versteht sich, dass dieser Bereich nicht direkt am Scheinwerfer sondern in einer gewissen Entfernung ausgeblendet werden sollte. Um diese Entfernung zu berechnen, kann beispielsweise die maximale gesetzlich erlaubte Lichtstärke von 215000 cd herangezogen werden, die ein Scheinwerfer abgeben darf. Bei einer Entfernung von etwa 463 m entsprechen 215000 cd einer Beleuchtungsstärke von 1 lx - diese Entfernung wird oft als "1 Lux Grenze" bezeichnet. Befindet sich ein anderer Verkehrsteilnehmer, z.B. das vorgenannte Motorrad, innerhalb der 1 Lux Grenze soll er ausgeblendet werden, damit es nicht zu einer Blendung kommt. Ein Bereich von 1,5 m in einer Entfernung von 463 m entspricht einem Öffnungswinkel (von dem Scheinwerfer aus gesehen) und damit einer Auflösung von etwa 0,18°.

Zusammenfassend lassen sich die Lichtverteilungen - und auch die Lichtmodule, die diese Lichtverteilungen erzeugen - in Hinblick auf Auflösung wie folgt charakterisieren:
- hochauflösende Lichtverteilung: Auflösung ist kleiner oder gleich 0,2°, beispielsweise zwischen 0,1° und 0,18°;
- high perfomance Auflösung: Auflösung ist zwischen 0,2° und 0,5°;
- Übergangsbereich: Auflösung ist zwischen 0,5° und 1°;
- mittlere Auflösung: Auflösung zwischen 1° und 3°;
- grobe Auflösung: Auflösung ist größer als 3°.

Die Auflösungen können auch Scheinwerferfunktionen entsprechen, die mittels der Lichtmodule realisiert werden. Beispielsweise kann für reine Abblendlicht- und/oder - nicht blendfreie - Fernlichtfunktion ein grobauflösendes Lichtmodul verwendet werden. Scheinwerfermodule, mit den eine high performance Auflösung erreicht werden kann, können blendfreies Fernlicht erzeugen (z.B. LED-Matrix-Systeme). Die Lichtmodule, die eine Lichtverteilung mit einer mittleren Auflösung erzeugen können, können neben blendfreiem Fernlicht auch weitere dynamische Abblendlichtfunktionen, wie Kurvenlicht, erzeugen werden, ohne das es erforderlich ist, das Lichtmodul zu schwenken. Bei den hochauflösenden Lichtmodulen handelt es sich um Lichtmodule, die eingerichtet sind, Projektionen von Symbolen, Linien, Schriftzügen etc. auf die Fahrbahn oder auf eine andere Projektionsebene zu erzeugen.

Vorzugsweise ist das zweite Lichtmodul ein DLP-Lichtmodul. Die Auflösung eines solchen Lichtmoduls kann durch die Auflösung des in dem DLP-Lichtmodul verwendeten DLP Chips bestimmt werden. Bei einer bevorzugten Ausführungsform wird ein DLP Chip mit einer Auflösung von 1,3 Megapixel beziehungsweise 1156*1156 Pixel. Somit kann ein DLP-Lichtmodul eine wesentlich höhere Auflösung der Lichtverteilung als die oben genannte 0,2° erreichen.

Als Technologie für das zweite Lichtmodul kommen außerdem weitere hochauflösende Module wie DMD, Laserscanner, LCD, hochauflösende LED Arrays oder ähnliches in Frage.

Im Zusammenhang mit der vorliegenden Erfindung wird unter dem Begriff "Bereich vor dem Lichtmodul-System" ein Bereich vor - in Hauptabstrahlrichtung gesehen - den Lichtmodulen des Systems verstanden. Wenn die Lichtmodule des Lichtmodul-Systems in einem Kraftfahrzeugscheinwerfer verbaut sind, bezieht sich dieser Bereich auf einen Bereich vor dem Kraftfahrzeugscheinwerfer. Unter einer Lichtverteilung wird auf dem Gebiet der Kraftfahrzeug-Lichttechnik je nach Kontext entweder ein durch ein Lichtmodul beziehungsweise einen Kraftfahrzeugscheinwerfer erzeugter dreidimensionaler Lichtkegel - das heißt kegelförmig abgestrahltes Licht des Lichtmoduls beziehungsweise des Kraftfahrzeugscheinwerfers - oder eine zweidimensionale Projektion dieses Lichtkegels auf dem Boden - dabei wird oft der Begriff "Bodenprojektion" verwendet - oder auf einer gedachten zur Hauptabstrahlrichtung senkrecht angeordneten Ebene. Als eine solche Ebene kann beispielsweise ein Messschirm in einem Lichttechniklabor dienen, der in einem ca. 25-Meter-Abstand vor dem Lichtmodul, Lichtmodul-System oder Kraftfahrzeugscheinwerfer angeordnet ist. Der vorgenannte Bereich fängt typischerweise bei etwa 1 Meter vor dem Lichtmodul-System an.

Unter dem Begriff "ungedimmte" beziehungsweise "gedimmte" Lichtverteilung wird eine Lichtverteilung verstanden, die eine unverringerte beziehungsweise verringerte Helligkeit aufweist.

Die Mindesthelligkeit kann beispielsweise eine gesetzlich, beispielsweise nach ECE, FMVSS, AIS, CCC geforderte Mindesthelligkeit sein. Beispielsweise werden im Bereich des Asymmetrieanstiegs einer asymmetrischen Hell-Dunkel-Grenze einer Abblendlichtverteilung Mindesthelligkeitswerte nach ECE-R123 vorgeschrieben.

Das erste Lichtmodul kann beispielsweise ein dimmbares Leuchtmittel (halbleiterbasierte Lichtquelle, wie Laserdioden, LEDs, etc.) und/oder eine Blendenvorrichtung, deren Lichtdurchlässigkeit variierbar ist, umfassen, um die Lichtverteilung zu dimmen. Eine solche Blendenvorrichtung kann beispielsweise ein LCD, LCoS, o.Ä. umfassen oder als solche ausgebildet sein.

Es kann zweckdienlich sein, wenn das Lichtmodul-System ferner eine Steuervorrichtung umfasst, die dem ersten und dem zweiten Lichtmodul zugeordnet ist und eingerichtet ist, das erste und das zweite Lichtmodul zu steuern und das erste Lichtmodul in Abhängigkeit von dem zweiten Lichtmodul, wie vorstehend beschrieben, zu steuern. Wenn die vorstehend beschriebenen Steuersignale von dem zweiten Lichtmodul an das erste Lichtmodul über die Steuervorrichtung gelangen, steuert das zweite Lichtmodul das erste Lichtmodul indirekt. Weiters kann die Steuervorrichtung das zweite Lichtmodul in verschiedenen, nachstehend beispielhaft beschriebenen Betriebsmodi betreiben und zwischen den Modi schalten. Die Steuervorrichtung kann beispielsweise auch das vorgenannte Leuchtmittel und/oder die vorgenannte Blendenvorrichtung steuern. Beispielsweise kann die Steuervorrichtung Steuersignale an das erste Lichtmodul und das zweite Lichtmodul schicken und von dem ersten Lichtmodul und von dem zweiten Lichtmodul empfangen. Insbesondere kann die Steuervorrichtung das zweite Lichtmodul und das erste Lichtmodul in Abhängigkeit von dem zweiten Lichtmodul wie folgt steuern:
- Senden von Befehl 1 an das zweite Lichtmodul: Symbol projizieren (Bodenprojektion-Lichtverteilung wird erzeugt);
- Senden von Befehl 2 an das erste Lichtmodul: die gesamte Lichtverteilung Dimmen;
- Senden von Befehl 3 an das zweite Lichtmodul: der Teil der Lichtverteilung, dem die Mindesthelligkeit zugeordnet ist, ausleuchten (die Helligkeit dieses Teils der Lichtverteilung bleibt vorzugsweise unverändert).

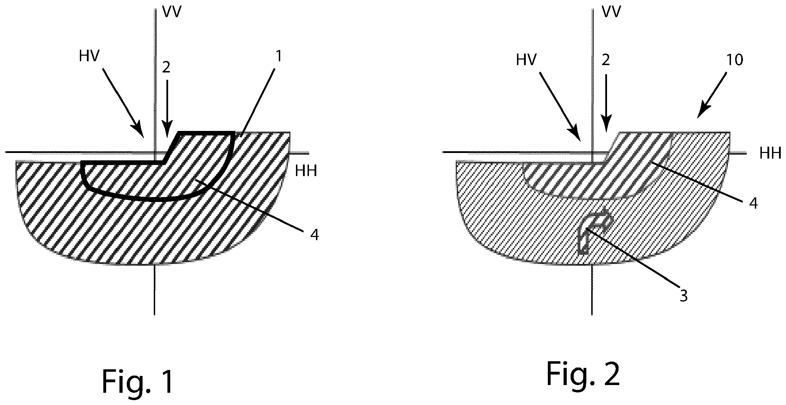

Bei einer bevorzugten Ausführungsform kann vorgesehen sein, dass die Bodenprojektion-Lichtverteilung in der Lichtverteilung des ersten Typs vollständig enthalten ist. Es versteht sich, dass sich Begriffe wie "enthalten", "überlappen" usw., die Positionen der Lichtverteilungen beziehungsweise der Bereiche dieser Lichtverteilungen betreffen, auf die vorgenannten Projektionen der entsprechenden Lichtkegel beziehen. Dies wird nochmals durch die nachstehende Figur 2 verdeutlicht.

Des Weiteren kann vorgesehen sein, dass das zweite Lichtmodul eingerichtet ist, in dem Betriebsmodus den Teil der Lichtverteilung auszuleuchten, wenn das Dimmen der Lichtverteilung des ersten Typs dazu führt, dass die Mindesthelligkeit in dem Teil der Lichtverteilung des ersten Typs (von oben) erreicht wird. Es soll dabei betont werden, dass der Teil der gedimmten Lichtverteilung ausgeleuchtet wird, sobald die Mindesthelligkeit erreicht wird - das heißt gleichzeitig mit dem Erreichen der Mindesthelligkeit.

Die Unterstützung der dimmbaren Lichtverteilung des ersten Typs, beispielsweise einer dimmbaren Abblendlichtverteilung, erfolgt unter einer weiteren Bedingung - nämlich dann, wenn die Mindesthelligkeit, in dem Teil der gedimmten Lichtverteilung der die Hell-Dunkel-Grenze umfasst, erreicht wird. Dadurch kann die Zeit, in der das zweite Lichtmodul den Teil der gedimmten Lichtverteilung ausleuchtet, reduziert und infolgedessen Energieverbrauch optimiert werden.

Der vorgenannten Steuervorrichtung kann beispielsweise eine Sensoreinrichtung, wie Kameras zugeordnet sein, um die Helligkeit der durch das Lichtmodul-System erzeugten Lichtverteilungen zu messen. Eine Messung der Helligkeit bei den erzeugten Lichtverteilungen ist allerdings nicht notwendig. Es ist beispielsweise denkbar, dass das erste Lichtmodul eine Dimmung-Schwelle als Dimmung-Parameter enthält. Wird das erste Lichtmodul auf diese Dimmung-Schwelle gedimmt, so werden die Mindesthelligkeitswerte in dem vorgenannten Teil der gedimmten Lichtverteilung (automatisch) erreicht. Beim Erreichen der Dimmung-Schwelle beziehungsweise beim Herabsetzen der Helligkeit auf die Dimmung-Schwelle kann das erste Lichtmodul dies an das zweite Lichtmodul (direkt oder über die Steuervorrichtung) kommunizieren. Das zweite Lichtmodul kann in dem Fall anfangen, den oben genannten Teil der Lichtverteilung auszuleuchten.

Erfindungsgemäß wird vorgesehen, dass der Teil der Lichtverteilung des ersten Typs, dem die Mindesthelligkeit zugeordnet ist, einen Hell-Dunkel-Übergang umfasst.

Die Mindesthelligkeit kann beispielsweise als Mindestbeleuchtungsstärke ausgedrückt werden.

Erfindungsgemäß wird vorgesehen, dass das erste Lichtmodul ein grobauflösendes Abblendlichtmodul ist, die Lichtverteilung des ersten Typs eine Abblendlichtverteilung ist und der Teil der Lichtverteilung des ersten Typs, dem die Mindesthelligkeit zugeordnet ist, eine Hell-Dunkel-Grenze, beispielsweise eine asymmetrische Hell-Dunkel-Grenze umfasst.

Darüber hinaus kann mit Vorteil vorgesehen sein, dass das zweite Lichtmodul in einem weiteren Betriebsmodus betreibbar ist, wobei das zweite Lichtmodul in dem weiteren Betriebsmodus eine Lichtverteilung eines zweiten Typs erzeugt, wobei die Lichtverteilung des ersten Typs und die Lichtverteilung des zweiten Typs gemeinsam eine Gesamtlichtverteilung bilden, wobei die Lichtverteilung des zweiten Typs vorzugsweise eine Teil-Fernlichtverteilung ist und die Gesamtlichtverteilung eine Fernlichtverteilung ist. Unter einer Teil-Fernlichtverteilung wird eine Teil-Lichtverteilung verstanden, die gemeinsam mit einer Abblendlichtverteilung eine Fernlichtverteilung bildet.

Es kann zweckmäßig sein, wenn das zweite Lichtmodul eingerichtet ist, eine hochauflösende Lichtverteilung in einem horizontalen Winkelbereich zwischen etwa -20° und etwa +20°, beispielsweise zwischen etwa -12° und etwa +12°, insbesondere zwischen etwa -8,5° und etwa +8,5°, bevorzugt zwischen etwa -7° und etwa +7° abzustrahlen.

Unter dem Begriff "horizontaler Winkelbereich" wird ein Winkelbereich bei einer zweidimensionalen Projektion der Lichtverteilung auf eine senkrecht zu der Hauptabstrahlrichtung stehenden Ebene verstanden. Oft beziehen sich diese Angaben auf den vorgenannten Messschirm in einem Lichttechniklabor. Dieser horizontale Winkelbereich entspricht auch dem azimutalen Öffnungswinkel des Lichtkegels.

Bei einer bevorzugten Ausführungsform kann vorgesehen sein, dass die optisch dargestellte Information zumindest einer der Folgenden ist: Navigationsinformationen, wie ein Richtungspfeil; ein Schriftzug; ein Logo; Fußgängerkommunikation, z.B. in Form eines projizierten Zebrastreifens, Welcome Logos oder Ähnliches.

Die vorgenannte Aufgabe wird auch mit einem Verfahren nach Anspruch 6 erfindungsgemäß dadurch gelöst, dass das Verfahren unter anderem folgende Schritte aufweist:
- Bereitstellen eines Lichtmodul-Systems, wobei das Lichtmodul-System ein erstes Lichtmodul sowie ein zweites Lichtmodul umfasst, wobei das erste Lichtmodul in Abhängigkeit von dem zweiten Lichtmodul steuerbar ist, wobei das erste Lichtmodul als ein nichthochauflösendes Lichtmodul ausgebildet ist und das zweite Lichtmodul als ein hochauflösendes Lichtmodul ausgebildet ist;
- Erzeugen einer dimmbaren Lichtverteilung in einem Bereich vor dem Lichtmodul-System mittels des ersten Lichtmoduls, wobei einem Teil der dimmbaren Lichtverteilung eine Mindesthelligkeit zugeordnet ist;
- Erzeugen zumindest der Bodenprojektion-Lichtverteilung in dem Bereich vor dem Lichtmodul-System mittels des zweiten Lichtmoduls, um die Information optisch darzustellen;
- Veranlassen des ersten Lichtmoduls mittels des zweiten Lichtmoduls dazu, die dimmbare Lichtverteilung zumindest teilweise zu dimmen, um eine gedimmte Lichtverteilung zu erzeugen, und Ausleuchten des Teils der gedimmten Lichtverteilung, dem die Mindesthelligkeit zugeordnet ist, mittels des zweiten Lichtmoduls.

Die Bodenprojektion-Lichtverteilung, durch die die Information optisch dargestellt wird, ist vorzugsweise komplett in dem mit der dimmbaren Lichtverteilung des ersten Typs beleuchteten Bereich enthalten. Genauer gesagt, ist die zweidimensionale Projektion der Bodenprojektion-Lichtverteilung auf den Boden von der zweidimensionalen Bodenprojektion der dimmbaren Lichtverteilung des ersten Typs umfasst.

Vorzugsweise veranlasst das zweite Lichtmodul das erste Lichtmodul dazu, die dimmbare Lichtverteilung zu dimmen, sobald das zweite Lichtmodul die Bodenprojektion-Lichtverteilung erzeugt beziehungsweise erzeugt hat, um den Kontrast der Bodenprojektion-Lichtverteilung (sobald wie möglich) zu erhöhen. Vorzugsweise wird der Teil der gedimmten Lichtverteilung entweder, gleich nachdem das erste Lichtmodul die Lichtverteilung des ersten Typs zu dimmen anfängt, oder, sobald die Mindesthelligkeit in diesem Teil erreicht beziehungsweise sobald die Helligkeit in diesem Teil auf die Mindesthelligkeit herabgesetzt wird, ausgeleuchtet.

Wie bereits erwähnt, kann in dem Teil der (zurück- oder herab-) gedimmten Lichtverteilung die Mindesthelligkeit erreicht werden. Dies geschieht aber nur ganz kurz, denn sobald die Mindesthelligkeit erreicht wird, leuchtet das zweite Lichtmodul den Teil aus und sorgt dafür, dass die Helligkeit in diesem Teil wieder angehoben wird und die Mindesthelligkeitswerte nicht unterschritten werden.

Die Aufgabe wird auch mit einem Computerprogramm gelöst, wobei das Computerprogramm Befehle umfasst, die bewirken, dass das vorgenannte Lichtmodul-System das vorgenannte Verfahren ausführt. Das Computerprogramm kann in dem Lichtmodul-System, beispielsweise in dem zweiten Lichtmodul, insbesondere auf einem Speichermedium in dem zweiten Lichtmodul gespeichert sein.

Bei einer bevorzugten Ausführungsform kann vorgesehen sein, dass das Computerprogramm auf der vorgenannten Steuervorrichtung gespeichert ist und die Befehle des Computerprogramms bewirken, dass die Steuervorrichtung das vorgenannte Verfahren ausführt.

Die Aufgabe wird auch mit einem computerlesbaren Medium mit einem solchen Computerprogramm gelöst.

Es kann vorgesehen sein, dass die vorgenannte Steuervorrichtung das computerlesbare Medium umfasst.

Weiterhin wird die Aufgabe mit einer Kraftfahrzeug-Steuervorrichtung mit dem vorgenannten computerlesbaren Medium gelöst.

Wie bereits erwähnt, kann das Lichtmodul-System eine Steuervorrichtung umfassen, die, wie oben beschrieben, das erste und das zweite Lichtmodul entsprechend steuert. Es ist zweckmäßig, wenn die Kraftfahrzeug-Steuervorrichtung diese Steuervorrichtung ist.

Darüber hinaus wird die Aufgabe mit einem Kraftfahrzeug oder einem Kraftfahrzeugscheinwerfer mit zumindest einem vorgenannten Lichtmodul-System nach und/oder mit zumindest einem vorgenannten computerlesbaren Medium oder mit zumindest einer vorgenannten Kraftfahrzeug-Steuervorrichtung. Die Kraftfahrzeug-Steuervorrichtung beziehungsweise die Steuervorrichtung des Lichtmodul-Systems kann beispielsweise in dem oder in den Kraftfahrzeugscheinwerfer(n) angeordnet sein und dessen/ deren integraler Teil sein. Sie kann auch ein integraler Teil eines elektronischen Zentralsteuerungssystems eines Kraftfahrzeugs sein.

Die Erfindung samt weiteren Vorteilen ist im Folgenden an Hand beispielhafter Ausführungsformen näher erläutert, die in der Zeichnung veranschaulicht sind. In dieser zeigt
Fig. 1 eine Abblendlichtverteilung, und
Fig. 2 eine unterstützte Abblendlichtverteilung und eine Bodenprojektion-Lichtverteilung.

In den folgenden Figuren bezeichnen - sofern nicht anders angegeben - gleiche Bezugszeichen gleiche Merkmale.

Figuren 1 und 2 zeigen Lichtverteilungen, die mit dem vorgenannten Lichtmodul-System, das gemäß dem vorgenannten Verfahren gesteuert wird, erzeugt werden können. Dabei kann das Lichtmodul-System in einem Kraftfahrzeugscheinwerfer beziehungsweise in einem Kraftfahrzeug angeordnet sein.

Zunächst wird auf die Figur 1 Bezug genommen. Diese zeigt eine dimmbare Abblendlichtverteilung 1, die beispielsweise auf einem Messschirm in einem Lichttechniklabor abgebildet ist. Figur 1 lässt ein orthogonales Koordinatensystem erkennen, das in den meisten Lichttechniklabors verwendet wird. Die X-Achse des Systems ist die HH-Linie oder die Horizontale. Dies ist eine dem Horizont entsprechende Linie auf dem Messschirm. Sie verläuft parallel zur Fahrbahn (im Labor - einer gedachten Fahrbahn). VV-Linie oder die Vertikale steht zur HH-Linie senkrecht und schneidet diese in einem Schnittpunkt HV der photometrischen Strahlachse aus der Mitte des Lichtmoduls mit dem Messschirm. Der Punkt HV ist der Ursprung des Koordinatensystems. Die dimmbare Abblendlichtverteilung 1 weist eine asymmetrische Hell-Dunkel-Grenze 2 auf.

Die dimmbare Abblendlichtverteilung 1 kann der Lichtverteilung des ersten Typs entsprechen, die das vorgenannte erste Lichtmodul erzeugt.

Figur 2 zeigt die dimmbare Abblendlichtverteilung **10** in einem gedimmten Zustand - dies wird durch unterschiedliche Strichelung verdeutlicht -, in dem die gedimmte Abblendlichtverteilung eine verminderte Helligkeit aufweist. Darüber hinaus ist in der Figur 2 eine Bodenprojektion-Lichtverteilung 3 in Form eines nach rechts gebogenen Pfeils zu erkennen. Der Pfeil ist eine optische Darstellung von Information. Dadurch kann beispielsweise signalisiert sein, dass ein Abbiegungsmanöver nach rechts geplant ist. Wie bereits erwähnt, kann die Bodenprojektion-Lichtverteilung 3 unterschiedlich ausgebildet sein und somit andere Informationen optisch darstellen. Beispielsweise kann die Bodenprojektion-Lichtverteilung 3 Navigationsinformationen, wie ein Richtungspfeil; ein Schriftzug; ein Logo; Fußgängerkommunikation, z.B. in Form eines projizierten Zebrastreifens, Welcome Logos oder Ähnliches sein. Eine Bodenprojektion-Lichtverteilung dieser Art wird oft zur Darstellung von graphischen Informationen eingesetzt und, wie bereits erwähnt, als "AIB" abgekürzt. Die Bodenprojektion-Lichtverteilung 3 ist mittels des vorgenannten zweiten Lichtmoduls erzeugt, wenn das zweite Lichtmodul in dem (ersten) Betriebsmodus betrieben wird. Sobald die Bodenprojektion-Lichtverteilung 3 erzeugt wird, veranlasst das zweite Lichtmodul das erste Lichtmodul zum Dimmen der Abblendlichtverteilung 1. Das erste Lichtmodul erzeugt sodann die gedimmte Abblendlichtverteilung 10. Die Abblendlichtverteilung 1 kann auch nach einer (eher kurzen) Verzögerung gedimmt werden, nachdem die Bodenprojektion-Lichtverteilung 3 erzeugt wurde. Dadurch wird der Kontrast und die Sichtbarkeit der Bodenprojektion-Lichtverteilung 3 erhöht und damit die Wahrnehmbarkeit der optisch dargestellten Information verbessert. Wie bereits erwähnt, ist einem Teil 4 der Abblendlichtverteilung eine vorgegebene Mindesthelligkeit zugeordnet. Diese Mindesthelligkeit kann beispielsweise eine gesetzlich vorgeschriebene Mindesthelligkeit sein. Das heißt, in einem gedimmten Zustand soll die Abblendlichtverteilung 1 die Mindesthelligkeit nicht unterschreiten, beziehungsweise die Mindesthelligkeit-Werte nicht unterschreiten. Vor allem, wenn die Mindesthelligkeit gesetzlich vorgeschrieben ist, darf sie nicht unterschritten werden. In dem weiteren (zweiten) Betriebsmodus kann das zweite Lichtmodul eine Teil-Fernlichtverteilung erzeugen.

Figuren 1 und 2 lassen erkennen, dass im Zusammenhang mit der vorliegenden Erfindung unter dem Begriff "Teil einer Lichtverteilung" ein räumlich abgegrenzte Bereich verstanden wird. Die Helligkeit eines solchen Teils kann variiert werden, ohne dass die Form des Teils verändert wird.

Um die Mindesthelligkeit nicht zu unterschreiten, unterstützt das zweite Lichtmodul das erste Lichtmodul, indem es den Teil 4 der Abblendlichtverteilung 1 ausleuchtet, während es in dem vorgenannten (ersten) Betriebsmodus betrieben wird und die Bodenprojektion-Lichtverteilung 3 erzeugt. Figur 2 lässt erkennen, dass dieser Teil 4 einen Teil der asymmetrischen Hell-Dunkel-Grenze 2 umfasst. Durch Ausleuchten des Teils 4 mit dem zweiten Lichtmodul ist beispielsweise möglich, in diesem Teil 4 dieselbe Helligkeit, wie bei der ungedimmten Abblendlichtverteilung 1 zu erreichen - dies wird durch gleiche Strichelung veranschaulicht. Es versteht sich, dass mit dem vorgenannten Lichtmodul-System oder Verfahren oder Kraftfahrzeugscheinwerfer oder Kraftfahrzeug dieselbe Helligkeit in dem Teil der Lichtverteilung des ersten Typs, der durch das zweite Lichtmodul ausgeleuchtet wird, für andere Lichtverteilungen oder für anders ausgebildete Teile der Lichtverteilungen erreicht werden kann.

Die vorstehende Beschreibung der Erfindung wurde der Knappheit halber auf jene Bestandteile beschränkt, die für eine Erklärung der Erfindung hilfreich sein können. Der Fachmann entnimmt der Beschreibung eindeutig, dass beispielsweise ein Lichtmodul-System noch eine Vielzahl weiterer, hier nicht explizit erwähnter Bestandteile aufweisen kann, wie Ein- und Verstelleinrichtungen, elektrische Versorgungsmittel, ein Sensormittel, beispielsweise eine oder mehrere Kameras zum Bestimmen der Helligkeit der abgestrahlten Lichtverteilungen und vieles mehr.

Die Bezugsziffern in den Ansprüchen dienen lediglich zum besseren Verständnis der vorliegenden Erfindungen und bedeuten auf keinen Fall eine Beschränkung der vorliegenden Erfindungen.

## Patentansprüche

1. Lichtmodul-System umfassend ein erstes Lichtmodul und ein zweites Lichtmodul, wobei das erste Lichtmodul in Abhängigkeit von dem zweiten Lichtmodul steuerbar ist, wobei
- das erste Lichtmodul als ein nichthochauflösendes Lichtmodul ausgebildet ist und eingerichtet ist, eine Lichtverteilung eines ersten Typs (1, 10) in einem Bereich vor dem Lichtmodul-System zu erzeugen, wobei die Lichtverteilung des ersten Typs (1, 10) eine dimmbare Abblendlichtverteilung ist, die eine Hell-Dunkel-Grenze aufweist,
- das zweite Lichtmodul als ein hochauflösendes Lichtmodul ausgebildet ist, wobei
- einem Teil (4) der Lichtverteilung des ersten Typs eine Mindesthelligkeit zugeordnet ist, wobei der Teil (4) ein Bereich der Lichtverteilung des ersten Typs (1, 10) ist, welcher deren Hell-Dunkel-Grenze aufweist, **dadurch gekennzeichnet, dass**
- das zweite Lichtmodul eingerichtet ist,
* in einem Betriebsmodus zumindest eine hochauflösende Bodenprojektion-Lichtverteilung (3) zu erzeugen und dabei das erste Lichtmodul dazu zu veranlassen, die gesamte Lichtverteilung des ersten Typs zu dimmen, und
* den Teil (4) der Lichtverteilung des ersten Typs (1, 10) hochauflösend auszuleuchten, sodass in dem Teil (4) dieselbe Helligkeit wie bei einer ungedimmten Lichtverteilung des ersten Typs (1, 10) vorliegt,
wobei die zumindest eine Bodenprojektion-Lichtverteilung (3) eine optische Darstellung einer Information ist.

2. Lichtmodul-System nach Anspruch 1, wobei das zweite Lichtmodul eingerichtet ist, in dem Betriebsmodus den Teil (4) der Lichtverteilung auszuleuchten, wenn das Dimmen der Lichtverteilung des ersten Typs dazu führt, dass die Mindesthelligkeit in dem Teil (4) der Lichtverteilung des ersten Typs erreicht wird.

3. Lichtmodul-System nach einem der Ansprüche 1 bis 2, wobei das zweite Lichtmodul in einem weiteren Betriebsmodus betreibbar ist, wobei das zweite Lichtmodul in dem weiteren Betriebsmodus eine Lichtverteilung eines zweiten Typs erzeugt, wobei die Lichtverteilung des ersten Typs und die Lichtverteilung des zweiten Typs gemeinsam eine Gesamtlichtverteilung bilden, wobei die Lichtverteilung des zweiten Typs vorzugsweise eine Teil-Fernlichtverteilung ist.

4. Lichtmodul-System nach einem der Ansprüche 1 bis 3, ferner umfassend eine Steuervorrichtung, die dem ersten und dem zweiten Lichtmodul zugeordnet ist und eingerichtet ist, das erste und das zweite Lichtmodul zu steuern und das erste Lichtmodul in Abhängigkeit von dem zweiten Lichtmodul zu steuern.

5. 7. Lichtmodul-System nach einem der Ansprüche 1 bis 4, wobei das zweite Lichtmodul eingerichtet ist, eine hochauflösende Lichtverteilung in einem horizontalen Winkelbereich zwischen etwa -20° und etwa +20°, beispielsweise zwischen etwa -12° und etwa +12°, insbesondere zwischen etwa -8,5° und etwa +8,5°, bevorzugt zwischen etwa -7° und etwa +7° abzustrahlen.

6. Verfahren zum Steuern eines Lichtmodul-Systems eines Kraftfahrzeugscheinwerfers, wobei das Lichtmodul-System eine Lichtverteilung erzeugt, in der zumindest eine Information optisch dargestellt ist, aufweisend folgende Schritte:
- Bereitstellen eines Lichtmodul-Systems, wobei das Lichtmodul-System ein erstes Lichtmodul sowie ein zweites Lichtmodul umfasst, wobei das erste Lichtmodul in Abhängigkeit von dem zweiten Lichtmodul steuerbar ist, wobei das erste Lichtmodul als ein nichthochauflösendes Lichtmodul ausgebildet ist und das zweite Lichtmodul als ein hochauflösendes Lichtmodul ausgebildet ist;
- Erzeugen einer dimmbaren Abblendlichtverteilung (1,10), die eine Hell-Dunkel-Grenze aufweist, in einem Bereich vor dem Lichtmodul-System mittels des ersten Lichtmoduls, wobei einem Teil (4) der dimmbaren Lichtverteilung (1,10) welcher deren Hell-Dunkel-Grenze aufweist,
eine Mindesthelligkeit zugeordnet ist;
- Erzeugen zumindest einer hochauflösenden Bodenprojektion-Lichtverteilung (3) in dem Bereich vor dem Lichtmodul-System mittels des zweiten Lichtmoduls, um die Information darzustellen;
- Veranlassen des ersten Lichtmoduls mittels des zweiten Lichtmoduls dazu, die dimmbare Lichtverteilung (1) insgesamt zu dimmen, um eine gedimmte Lichtverteilung (10) zu erzeugen, und
- Hochauflösendes ausleuchten des Teils (4) der gedimmten Lichtverteilung (10), dem die Mindesthelligkeit zugeordnet ist, mittels des zweiten Lichtmoduls, sodass in dem Teil (4) dieselbe Helligkeit wie bei einer ungedimmten Abblendlichtverteilung (1,10) vorliegt.

7. Verfahren nach Anspruch 6, wobei das Veranlassen des ersten Lichtmoduls mittels des zweiten Lichtmoduls dazu, die dimmbare Lichtverteilung (1) zu dimmen, gleich nach dem Erzeugen der zumindest einen Bodenprojektion-Lichtverteilung (3) erfolgt und vorzugsweise der Teil (4) der gedimmten Lichtverteilung (10) ausgeleuchtet wird, entweder gleich nachdem das erste Lichtmodul die Lichtverteilung des ersten Typs zu dimmen anfängt oder sobald die Mindesthelligkeit in diesem Teil (4) erreicht wird.

8. Computerprogramm umfassend Befehle, die bewirken, dass das Lichtmodul-System nach einem der Ansprüche 1 bis 5 das Verfahren nach einem der Ansprüche 6 und 7 ausführt.

9. 13. Computerlesbares Medium mit dem Computerprogramm nach Anspruch 8.

10. Kraftfahrzeug-Steuervorrichtung, insbesondere Steuervorrichtung für ein Lichtmodul-System nach einem der Ansprüche 1 bis 5 mit einem computerlesbaren Medium nach Anspruch 9.

11. Kraftfahrzeug oder Kraftfahrzeugscheinwerfer mit zumindest einem Lichtmodul-System nach einem der Ansprüche 1 bis 5 und/oder mit zumindest einem computerlesbaren Medium nach Anspruch 9 44 oder mit zumindest einer Kraftfahrzeug-Steuervorrichtung nach Anspruch 10.

## Claims

1. Light module system comprising a first light module and a second light module, wherein the first light module is controllable in dependence on the second light module, wherein
- the first light module being designed as a non-high-resolution light module and being set up to generate a light distribution of a first type (1, 10) in an area in front of the light module system, the light distribution of the first type (1, 10) being a dimmable dipped beam light distribution which has a cut-off line
- the second light module is designed as a high-resolution light module, wherein
- a minimum brightness is assigned to a part (4) of the light distribution of the first type, the part (4) being a region of the light distribution of the first type (1, 10) which has its cut-off line, **characterized in that**
- the second light module is arranged to,
* in an operating mode, to generate at least one high-resolution ground projection light distribution (3), thereby causing the first light module to dim the entire light distribution of the first type, and
* to illuminate the part (4) of the light distribution of the first type (1, 10) in high resolution,
so that the same brightness is present in the part (4) as in an undimmed light distribution of the first type (1, 10),
wherein the at least one ground projection light distribution (3) is an optical representation of information.

2. Light module system according to claim 1, wherein the second light module is arranged to illuminate the part (4) of the light distribution in the operating mode when the dimming of the light distribution of the first type results in the minimum brightness being reached in the part (4) of the light distribution of the first type.

3. Light module system according to any one of claims 1 to 2, wherein the second light module is operable in a further operating mode, wherein the second light module generates a light distribution of a second type in the further operating mode, wherein the light distribution of the first type and the light distribution of the second type together form an overall light distribution, wherein the light distribution of the second type is preferably a partial high beam distribution.

4. Light module system according to any one of claims 1 to 3, further comprising a control device associated with the first and the second light module and arranged to control the first and the second light module and to control the first light module in dependence on the second light module.

5. Light module system according to any one of claims 1 to 4, wherein the second light module is arranged to emit a high-resolution light distribution in a horizontal angular range between about - 20° and about +20°, for example between about -12° and about +12°, in particular between about -8.5° and about +8.5°, preferably between about -7° and about +7°.

6. Method for controlling a light module system of a motor vehicle headlamp, the light module system generating a light distribution in which at least one item of information is optically represented, having the following steps:
- Providing a light module system, wherein the light module system comprises a first light module and a second light module, wherein the first light module is controllable in dependence on the second light module, wherein the first light module is designed as a non-high-resolution light module and the second light module is designed as a high-resolution light module;
- generating a dimmable dipped beam light distribution (1, 10), which has a cut-off line, in an area in front of the light module system by means of the first light module, a minimum brightness being assigned to a part (4) of the dimmable light distribution (1, 10) which has its cut-off line;
- generating at least one high-resolution ground projection light distribution (3) in the area in front of the light module system by means of the second light module to display the information;
- causing the first light module by means of the second light module to dim the dimmable light distribution (1) as a whole to produce a dimmed light distribution (10), and
- high-resolution illumination of the part (4) of the dimmed light distribution (10), to which the minimum brightness is assigned, by means of the second light module, so that the same brightness is present in the part (4) as in an undimmed dimmed light distribution (1, 10).

7. Method according to claim 6, wherein causing the first light module by means of the second light module to dim the dimmable light distribution (1) takes place immediately after generating the at least one floor projection light distribution (3) and preferably the part (4) of the dimmed light distribution (10) is illuminated either immediately after the first light module starts to dim the light distribution of the first type or as soon as the minimum brightness in this part (4) is reached.

8. Computer program comprising instructions causing the light module system according to any one of claims 1 to 5 to perform the method according to any one of claims 6 and 7.

9. Computer-readable medium comprising the computer program according to claim 8.

10. Motor vehicle control device, in particular control device for a light module system according to any one of claims 1 to 5 with a computer-readable medium according to claim 9.

11. Motor vehicle or motor vehicle headlamp with at least one light module system according to one of the claims 1 to 5 and/or with at least one computer-readable medium according to claim 9 or with at least one motor vehicle control device according to claim 10.

## Revendications

1. Système de module d'éclairage comprenant un premier module d'éclairage et un deuxième module d'éclairage, le premier module d'éclairage pouvant être commandé en fonction du deuxième module d'éclairage, dans lequel
- le premier module d'éclairage est réalisé sous la forme d'un module d'éclairage à non haute résolution et est conçu pour générer une répartition de lumière d'un premier type (1, 10) dans une zone située devant le système de modules d'éclairage, la répartition de lumière du premier type (1, 10) étant une répartition de lumière de croisement à intensité variable qui présente une limite clair-obscur,
- le deuxième module d'éclairage est conçu comme un module d'éclairage à haute résolution, dans lequel
- une luminosité minimale est associée à une partie (4) de la répartition lumineuse du premier type, la partie (4) étant une zone de la répartition lumineuse du premier type (1, 10) qui présente sa limite clair-obscur, **caractérisé en ce que**
- le deuxième module d'éclairage est agencé ,
* à générer, dans un mode de fonctionnement, au moins une distribution lumineuse de projection au sol à haute résolution (3), tout en amenant le premier module d'éclairage à faire varier l'intensité de toute la distribution lumineuse du premier type, et
* éclairer en haute résolution la partie (4) de la distribution lumineuse du premier type (1, 10),
de sorte que la luminosité dans la partie (4) soit la même que dans le cas d'une distribution lumineuse non atténuée du premier type (1, 10), ladite au moins une distribution lumineuse de projection au sol (3) étant une représentation optique d'une information.

2. Système de module d'éclairage selon la revendication 1, dans lequel le deuxième module d'éclairage est agencé pour éclairer la partie (4) de la distribution lumineuse dans le mode de fonctionnement lorsque la gradation de la distribution lumineuse du premier type a pour effet d'atteindre la luminosité minimale dans la partie (4) de la distribution lumineuse du premier type.

3. Système de module d'éclairage selon l'une des revendications 1 à 2, dans lequel le deuxième module d'éclairage peut fonctionner dans un autre mode de fonctionnement, le deuxième module d'éclairage générant dans l'autre mode de fonctionnement une répartition lumineuse d'un deuxième type, la répartition lumineuse du premier type et la répartition lumineuse du deuxième type formant ensemble une répartition lumineuse globale, la répartition lumineuse du deuxième type étant de préférence une répartition lumineuse partielle de longue portée.

4. Système de module d'éclairage selon l'une des revendications 1 à 3, comprenant en outre un dispositif de commande associé au premier et au deuxième module d'éclairage et agencé pour commander le premier et le deuxième module d'éclairage et pour commander le premier module d'éclairage en fonction du deuxième module d'éclairage.

5. Système de module d'éclairage selon l'une des revendications 1 à 4, dans lequel le deuxième module à éclairage est agencé pour émettre une distribution de lumière à haute résolution dans une plage angulaire horizontale comprise entre environ -20° et environ +20°, par exemple entre environ -12° et environ +12°, notamment entre environ -8,5° et environ +8,5°, de préférence entre environ -7° et environ +7°.

6. Procédé de commande d'un système de module d'éclairage d'un phare de véhicule automobile, le système de module d'éclairage générant une répartition de lumière dans laquelle au moins une information est représentée de manière optique, comprenant les étapes suivantes :
- Mise à disposition d'un système de modules d'éclairage, le système de modules d'éclairage comprenant un premier module d'éclairage ainsi qu'un deuxième module d'éclairage, le premier module d'éclairage pouvant être commandé en fonction du deuxième module d'éclairage, le premier module d'éclairage étant conçu comme un module d'éclairage à non haute résolution et le deuxième module d'éclairage étant conçu comme un module d'éclairage à haute résolution ;
- Génération d'une répartition de lumière de croisement variable (1, 10), qui présente une limite clair-obscur, dans une zone située devant le système de modules d'éclairage au moyen du premier module d'éclairage, une luminosité minimale étant associée à une partie (4) de la répartition de lumière variable (1, 10) qui présente sa limite clair-obscur ;
- Générer au moins une répartition lumineuse de projection au sol à haute résolution (3) dans la zone située devant le système de modules d'éclairage au moyen du deuxième module d'éclairage afin de représenter l'information ;
- faire en sorte que le premier module d'éclairage, au moyen du deuxième module d'éclairage, atténue globalement la distribution lumineuse variable (1) afin de produire une distribution lumineuse atténuée (10), et
- Eclairage à haute résolution de la partie (4) de la distribution lumineuse atténuée (10) à laquelle est associée la luminosité minimale, au moyen du deuxième module d'éclairage, de sorte que la même luminosité que celle d'une distribution lumineuse de croisement non atténuée (1, 10) est présente dans la partie (4).

7. Procédé selon la revendication 6, dans lequel le fait d'amener le premier module d'éclairage, au moyen du deuxième module d'éclairage, à faire varier la luminosité de la distribution lumineuse variable (1) a lieu immédiatement après la création de ladite au moins une distribution lumineuse de projection au sol (3) et, de préférence, la partie (4) de la distribution lumineuse variable (10) est éclairée, soit immédiatement après que le premier module d'éclairage a commencé à faire varier la luminosité de la distribution lumineuse du premier type, soit dès que la luminosité minimale est atteinte dans cette partie (4).

8. Programme d'ordinateur comprenant des instructions pour que le système de modules d'éclairage selon l'une quelconque des revendications 1 à 5 mette en oeuvre le procédé selon l'une quelconque des revendications 6 et 7.

9. Support lisible par ordinateur comprenant le programme d'ordinateur selon la revendication 8.

10. Dispositif de commande de véhicule automobile, notamment dispositif de commande d'un système de module d'éclairage selon l'une quelconque des revendications 1 à 5, comprenant le support lisible par ordinateur selon la revendication 9.

11. Véhicule automobile ou projecteur de véhicule automobile comportant au moins un système de module d'éclairage selon l'une des revendications 1 à 5 et/ou comportant au moins un support lisible par ordinateur selon la revendication 9 ou comportant au moins un dispositif de commande de véhicule automobile selon la revendication 10.
